# EUROPEAN PATENT SPECIFICATION

(11) **EP 3 632 871 B1**
(45) Date of publication and mention of the grant of the patent: **06.07.2022**
(21) Application number: 18809857.8
(22) Date of filing: 15.05.2018
(51) Int. Cl.: C03C 27/06, B65G 49/06, E06B 3/663, E06B 3/66, E06B 3/677, E06B 3/673

(54) **METHOD AND APPARATUS FOR PLACING PILLARS**
VERFAHREN UND VORRICHTUNG ZUM PLATZIEREN VON SÄULEN
MÉTHODE ET APPAREIL POUR PLACER DES PILIERS

(30) Priority: 31.05.2017 JP 2017108711
(43) Date of publication of application: 08.04.2020
(73) Proprietor: Panasonic Intellectual Property Management Co., Ltd., Osaka-shi, Osaka 540-6207 (JP)
(72) Inventor: NONAKA, Masataka, Osaka-shi, Osaka 540-6207 (JP); SHIMIZU, Takeshi, Osaka-shi, Osaka 540-6207 (JP); ISHIKAWA, Haruhiko, Osaka-shi, Osaka 540-6207 (JP); URIU, Eiichi, Osaka-shi, Osaka 540-6207 (JP); HASEGAWA, Kazuya, Osaka-shi, Osaka 540-6207 (JP); ISHIBASHI, Tasuku, Osaka-shi, Osaka 540-6207 (JP); ABE, Hiroyuki, Osaka-shi, Osaka 540-6207 (JP)
(74) Representative: Müller-Boré & Partner Patentanwälte PartG mbB
(86) International application number: PCT/JP2018/018692
(87) International publication number: WO 2018/221200

(56) References cited:
- DE-A1-102010 021 127
- JP-A- H11 247 539
- JP-A- 2001 172 059
- US-A1- 2014 202 637

## Description

### Technical Field

The present disclosure generally relates to a method and apparatus for placing pillars, and more particularly relates to a method and apparatus for placing, on a substrate including at least a glass pane, a plurality of pillars in a predetermined arrangement pattern.

### Background Art

A glazing unit with an evacuated space created between a pair of substrates has been known in the art. To manufacture this type of glazing unit, it is a general practice to place a plurality of pillars (spacers) on one substrate, arrange another substrate to interpose the plurality of pillars between the former and latter substrates, and then hermetically bond the two substrates together with a sealing material applied to surround the plurality of pillars (see, for example, Patent Literature 1).

To place the plurality of pillars on the substrate, the pillars are often transported to the substrate using a suction pad, for example. In that case, however, after the pillars placed on the substrate have been released, the pillars may shift from their intended positions due to the tilt of the upper surface of the substrate, or the presence of static electricity, for example.

It is therefore an object of the present disclosure to provide a pillar placement method and pillar placement apparatus with the ability to efficiently place a plurality of pillars on a substrate while reducing their positional shift.

### Citation List

### Patent Literature

Patent Literature 1: JP 2005-231930 A

DE 10 2010 021127 A1 describes an apparatus and a method for manufacturing a multilayer insulating glass with a vacuum insulation.

### Summary of Invention

A pillar placement method according to an implementation of the present disclosure is a method for placing a plurality of pillars on a substrate, including at least a glass pane, such that **the** plurality of pillars are arranged to form a predetermined pattern and spaced apart from each other. The pillar placement method includes: a set-up step of setting up the substrate (1) on a magnet stage (9); and a placement step of placing the plurality of pillars (4), each including a magnetic body, in the predetermined pattern on the substrate (1), wherein the magnet stage (9) includes an electromagnet (95) installed in a portion of the magnet stage (9), the placement step includes: a mounting step of mounting at least one of the plurality of pillars (4) on a region (115), located over the electromagnet (95), of the substrate (1); and a displacement step of changing a relative position of the substrate (1) with respect to the magnet stage (9), the mounting step is performed repeatedly and alternated with the displacement step, and the electromagnet (95) is configured to generate a magnetic field during the mounting step and weaken or dissipate the magnetic field during the displacement step.

A pillar placement apparatus according to another implementation of the present disclosure is an apparatus for placing a plurality of pillars on a substrate, including at least a glass pane (100), such that the plurality of pillars (4) are arranged to form a predetermined pattern and spaced apart from each other, the apparatus comprising: a magnet stage (9) configured to support the substrate (1) thereon; a transport mechanism (5) configured to transport the plurality of pillars (4), each including a magnetic body, to predetermined positions on the substrate (1); and a displacement mechanism (8) configured to change a relative position of the substrate (1) with respect to the magnet stage (9), wherein the magnet stage (9) includes an electromagnet (95) installed in a portion of the magnet stage (9), and the electromagnet (95) is configured to generate a magnetic field at a timing to transport the plurality of pillars (4) to predetermined positions on the substrate (1) and weaken or dissipate the magnetic field at a timing to change a relative position of the substrate (1) with respect to the magnet stage (9).

### Brief Description of Drawings

FIG. 1 is a side view illustrating a main part of a pillar placement apparatus according to an exemplary embodiment;
FIG. 2 is a side view illustrating how a pillar is mounted on a substrate by the pillar placement apparatus;
FIG. 3 is a side view illustrating how the substrate is displaced by a pitch by the pillar placement apparatus;
FIG. 4 is a side view illustrating how the next pillar is transported by the pillar placement apparatus;
FIG. 5 is a perspective view illustrating how another substrate is laid on top of the substrate; and
FIG. 6 is a perspective view illustrating a glazing unit formed to include the substrate and the other substrate.

### Description of Embodiments

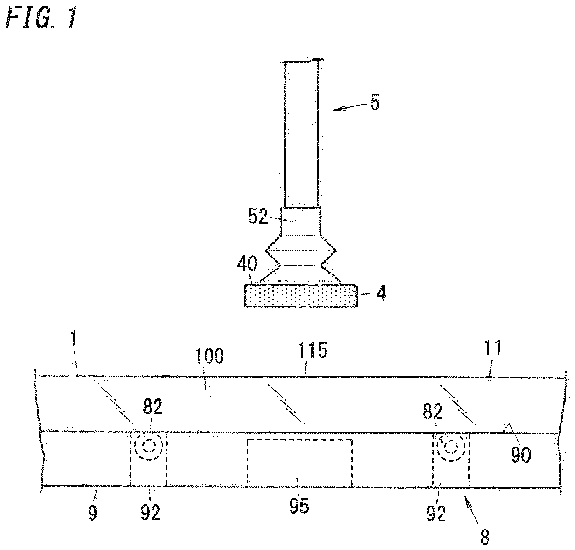

FIGS. 1-4 schematically illustrate a pillar placement apparatus according to an exemplary embodiment. The pillar placement apparatus is an apparatus for placing a plurality of (or multiple) pillars on the upper surface 11 of a substrate 1 in a predetermined pattern.

The substrate 1 and the plurality of pillars 4 placed thereon are members that form respective parts of a glazing unit.

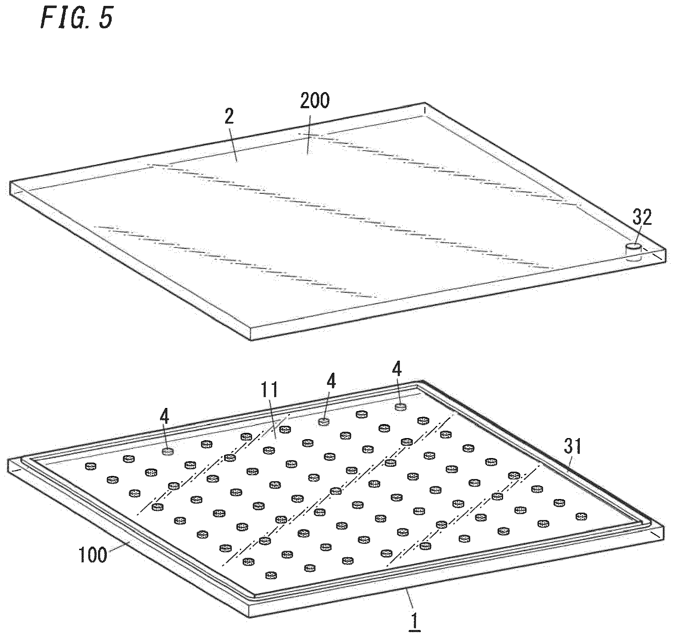

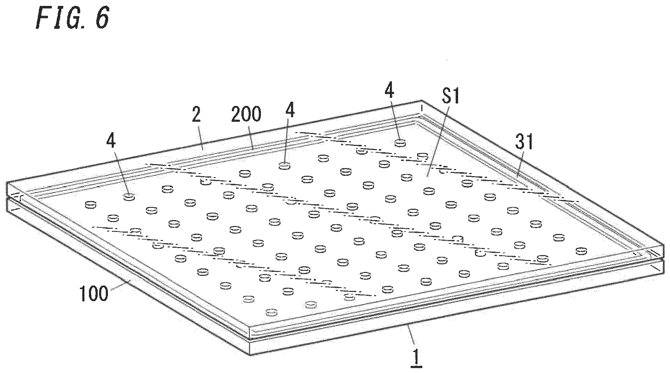

After the plurality of pillars 4 have been placed on the substrate 1, another substrate 2 (see FIGS. 5 and 6) is laid on top of the substrate 1 to face the upper surface 11 of the substrate 1, and then these two substrates 1 and 2 facing each other are hermetically bonded together with a sealing material 31 in a frame shape. The plurality of pillars 4 are arranged to be surrounded with the sealing material 31.

An internal space S1 is created between the substrates 1 and 2 bonded together (see FIG. 6). In the internal space S1, arranged are the plurality of pillars 4. The plurality of pillars 4 keeps a predetermined gap distance between the substrates 1 and 2. In an exemplary embodiment, the internal space S1 is evacuated to a predetermined degree of vacuum through an evacuation port 32 (see FIG. 5) of the substrate 2 and then the evacuation port 32 is sealed up. In this manner, the glazing unit shown in FIG. 6 is obtained.

The substrate 1 includes a glass pane 100, and the substrate 2 includes a glass pane 200. Optionally, the surface of the glass pane 100 may be coated with an appropriate film such as a low-emissivity (low-E) film. Likewise, the surface of the glass pane 200 may also be coated with an appropriate film such as a low-emissivity (low-E) film.

As shown in FIGS. 1-4, the pillar placement apparatus includes a magnet stage 9 having a supporting surface 90 provided to support the substrate 1 thereon, and a transport mechanism 5 for transporting one of the plurality of pillars 4 after another onto the upper surface 11 of the substrate 1 supported by the magnet stage 9. Each of the pillars 4 is formed to include a magnetic body such as a metal.

The magnet stage 9 is a stage, at least a portion of which is configured to generate a magnetic field. That portion of the magnet stage 9 is implemented as an electromagnet 95. The electromagnet 95 is configured to generate a magnetic field over itself when supplied with electricity, weaken the magnetic field when the supply of the electricity decreases, and dissipate the magnetic field when the supply of the electricity is cut off.

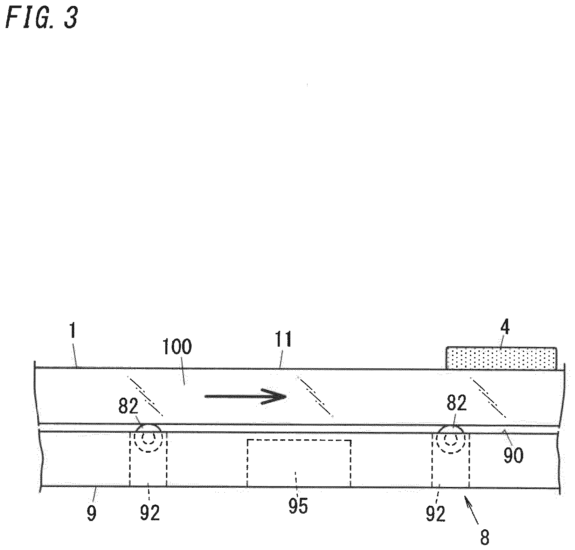

The magnet stage 9 includes a plurality of rollers 82. Each of the rollers 82 is provided to readily protrude from, or be retracted into, the supporting surface 90 of the magnet stage 9 through an associated through hole 92 cut through the magnet stage 9. When the substrate 1 needs to be moved, an upper part of each roller 82 protrudes from an associated through hole 92 to drive the roller 82 in rotation in one direction (see FIG. 3).

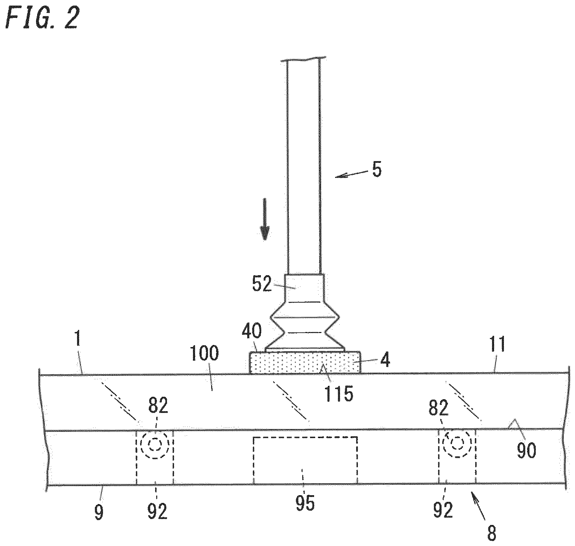

These rollers 82 constitute a displacement mechanism 8 for changing the relative position of the substrate 1 with respect to the magnet stage 9. When the pillars 4 need to be placed on the substrate 1, for example, the substrate 1 is firmly supported on the supporting surface 90 of the magnet stage 9 with the rollers 82 retracted into the respective through holes 92 (see FIG. 2, for example).

The transport mechanism 5 includes a suction pad 52 with the ability to suck the pillar 4 and then release the pillar 4 when suction is no longer required. The suction pad 52 is able to transport the pillar 4 to a target position on the upper surface 11 of the substrate 1 while being sucked to the upper surface 40 of the pillar 4 with a pillar (or cylindrical) shape, and then release the pillar 4 at the target position. Releasing the pillar 4 allows the pillar 4 to be mounted at the target position on the upper surface 11 of the substrate 1.

In FIGS. 1-4, only one suction pad 52 is illustrated. However, this is only an example and should not be construed as limiting. Alternatively, a plurality of suction pads 52 may be provided for the transport mechanism 5 and used to transport a plurality of pillars 4 simultaneously. Nevertheless, the transport mechanism 5 does not have to have such a configuration with a single or a plurality of suction pads 52 but may also be configured to transport the pillars 4 using a different structure from the suction pad(s) 52.

To place a plurality of (or multiple) pillars 4 on the upper surface 11 of the substrate 1 using the pillar placement apparatus according to the exemplary embodiment described above such that the pillars 4 are spaced apart from each other, first, the substrate 1 is set up on the supporting surface 90 of the magnet stage 9 (in the setup step). This allows the substrate 1 to be held facing up (i.e., with its upper surface 11 facing vertically upward).

Next, the plurality of pillars 4 are placed, using the suction pad 52, one after another on the upper surface 11 of the substrate 1 supported on the magnet stage 9 (in the placement step).

The placement step includes alternating the step of mounting one of the plurality of pillars 4 on the upper surface 11 of the substrate 1 (i.e., the mounting step) with the step of horizontally changing the relative position of the substrate 1 with respect to the magnet stage 9 (i.e., the displacement step).

On the upper surface 11 of the substrate 1, a region where each pillar 4 is mounted in the mounting step is a region 115 located over the electromagnet 95 that forms part of the magnet stage 9 (see FIGS. 1 and 2). Before the pillar 4 is mounted there, the electromagnet 95 is supplied with electricity to generate a magnetic field in at least this region 115 in advance. Then, the magnetic attraction generated between the pillar 4 including the magnetic body and the electromagnet 95 effectively reduces the chances of the pillar 4 shifting from its intended position on the substrate 1.

Next, in the displacement step, the substrate 1 is displaced in one direction by rotating the rollers 82 protruding upward from the respective through holes 92 (see FIG. 3). In this process step, the supply of electricity to the electromagnet 95 is either decreased or cut off to weaken or dissipate the magnetic attraction between the pillar 4 and the electromagnet 95.

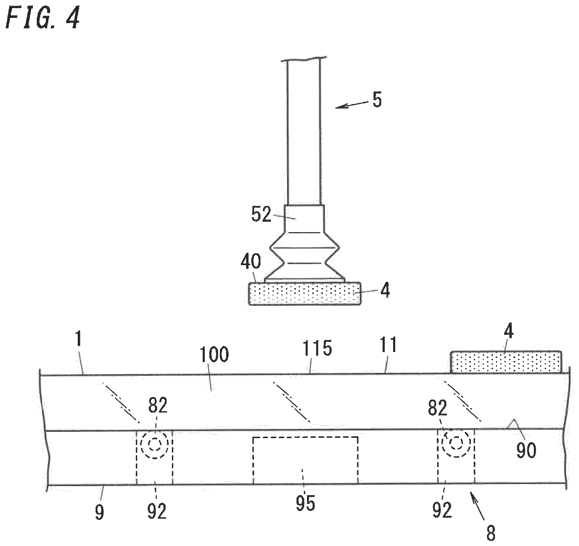

After the substrate 1 and the pillar 4 mounted thereon have been horizontally displaced by a predetermined pitch in the displacement step, the mounting step is performed again in the same procedure (see FIG. 4). After that, the displacement step and the mounting step will be performed alternately over and over again.

This allows for efficiently placing a plurality of (or multiple) pillars 4 on the substrate 1 while reducing the chances of the pillars 4 shifting from their intended positions.

A pillar placement method according to claim 1 is a method for placing a plurality of pillars (4) on a substrate (1), including at least a glass pane (100), such that the plurality of pillars (4) are arranged in a predetermined pattern and spaced apart from each other.

The pillar placement method according to claim 1 includes a setup step and a placement step. The setup step includes setting up the substrate (1) on a magnet stage (9). The placement step includes placing the plurality of pillars (4), each including a magnetic body, in the predetermined pattern on the substrate (1).

The pillar placement method according to claim 1 allows a plurality of pillars (4) to be placed efficiently on the substrate (1) with their positional shift reduced by utilizing magnetic attraction generated between each pillar (4) and the magnet stage (9).

The magnet stage (9) includes an electromagnet (95) installed in a portion of the magnet stage (9).

The pillar placement method according to claim 1 allows the electromagnet (95) to generate a magnetic field at a timing to place each pillar (4) on the substrate (1) and also allows the magnetic field to be weakened, or even dissipated, at the other timings.

In a pillar placement method according to claim 1, the placement step includes a mounting step and a displacement step. The mounting step includes mounting at least one of the plurality of pillars (4) on a region (115), located over the electromagnet (95), of the substrate (1). The displacement step includes changing a relative position of the substrate (1) with respect to the magnet stage (9). The mounting step is performed repeatedly and alternated with the displacement step.

The pillar placement method according to claim 1 allows, even without installing many electromagnets (95), magnetic attraction to be generated to reduce the chances of the pillars (4) shifting during the mounting step, thus simplifying the equipment used.

A pillar placement apparatus according to claim 2 is an apparatus for placing a plurality of pillars (4) on a substrate (1), including at least a glass pane (100), such that the plurality of pillars (4) are arranged in a predetermined pattern and spaced apart from each other.

The pillar placement apparatus according to claim 2 includes: a magnet stage (9) configured to hold the substrate (1) thereon; and a transport mechanism (5) configured to transport the plurality of pillars (4), each including a magnetic body, to predetermined positions on the substrate (1).

The pillar placement apparatus according to claim 2 allows a plurality of pillars (4) to be placed efficiently on the substrate (1) with their positional shift reduced by utilizing magnetic attraction generated between each pillar (4) and the magnet stage (9).

In a pillar placement apparatus according to claim 2, the magnet stage (9) includes an electromagnet (95) installed in a portion (115) of the magnet stage (9).

The pillar placement apparatus according to claim 2 allows the electromagnet (95) to generate a magnetic field at a timing to place each pillar (4) on the substrate (1) and also allows the magnetic field to be weakened, or even dissipated, at the other timings.

A pillar placement apparatus according to claim 2 includes a displacement mechanism (8) configured to change a relative position of the substrate (1) with respect to the magnet stage (9).

The pillar placement apparatus according to claim 2, even without installing a lot of electromagnets (95), magnetic attraction to be generated to reduce the chances of the pillars (4) shifting during the mounting step, thus simplifying the equipment used.

Note that embodiments of the pillar placement apparatus and pillar placement method described above with reference to the accompanying drawings are only examples of the present disclosure and should not be construed as limiting. Rather, those embodiments may naturally be readily modified as appropriate in various manners depending on a design choice or any other factor.

### Reference Signs List

- 1: Substrate
- 115: Region
- 100: Glass Pane
- 4: Pillar
- 5: Transport Mechanism
- 8: Displacement Mechanism
- 9: Magnet Stage
- 95: Electromagnet

## Claims

1. A method for placing a plurality of pillars (4) on a substrate (1), including at least a glass pane (100), such that the plurality of pillars (4) are arranged to form a predetermined pattern and spaced apart from each other, the method comprising:
a setup step of setting up the substrate (1) on a magnet stage (9); and
a placement step of placing the plurality of pillars (4), each including a magnetic body, in the predetermined pattern on the substrate (1), wherein
the magnet stage (9) includes an electromagnet (95) installed in a portion of the magnet stage (9),
the placement step includes:
a mounting step of mounting at least one of the plurality of pillars (4) on a region (115), located over the electromagnet (95), of the substrate (1); and
a displacement step of changing a relative position of the substrate (1) with respect to the magnet stage (9),
the mounting step is performed repeatedly and alternated with the displacement step, and
the electromagnet (95) is configured to generate a magnetic field during the mounting step and weaken or dissipate the magnetic field during the displacement step.

2. An apparatus for placing a plurality of pillars (4) on a substrate (1), including at least a glass pane (100), such that the plurality of pillars (4) are arranged to form a predetermined pattern and spaced apart from each other, the apparatus comprising:
a magnet stage (9) configured to support the substrate (1) thereon;
a transport mechanism (5) configured to transport the plurality of pillars (4), each including a magnetic body, to predetermined positions on the substrate (1); and
a displacement mechanism (8) configured to change a relative position of the substrate (1) with respect to the magnet stage (9),
wherein
the magnet stage (9) includes an electromagnet (95) installed in a portion of the magnet stage (9), and
the electromagnet (95) is configured to generate a magnetic field at a timing to transport the plurality of pillars (4) to predetermined positions on the substrate (1) and weaken or dissipate the magnetic field at a timing to change a relative position of the substrate (1) with respect to the magnet stage (9).

## Patentansprüche

1. Ein Verfahren zum Platzieren einer Vielzahl von Säulen (4) auf einem Substrat (1), das mindestens eine Glasscheibe (100) enthält, sodass die Vielzahl von Säulen (4) so angeordnet ist, dass diese ein vorbestimmtes Muster bilden und voneinander beabstandet sind, wobei das Verfahren Folgendes umfasst:
einen Einrichtungsschritt des Einrichtens des Substrats (1) auf einem Magnettisch (9); und
einen Platzierungsschritt zum Platzieren der Vielzahl von Säulen (4), die jeweils einen Magnetkörper beinhalten, im vorbestimmten Muster auf dem Substrat (1), wobei
der Magnettisch (9) einen Elektromagneten (95) beinhaltet, der in einem Abschnitt des Magnettisches (9) installiert ist,
der Platzierungsschritt Folgendes beinhaltet:
einen Anbringungsschritt des Anbringens von mindestens einer der Vielzahl von Säulen (4) auf eine Zone (115) des Substrats (1), die sich über dem Elektromagneten (95) befindet; und
einen Verschiebungsschritt des Änderns einer relativen Position des Substrats (1) relativ zum Magnettisch (9),
wobei der Montageschritt wiederholt und abwechselnd mit dem Verschiebungsschritt durchgeführt wird, und
wobei der Elektromagnet (95) so konfiguriert ist, dass er während des Montageschrittes ein Magnetfeld erzeugt und während des Verschiebungsschrittes das Magnetfeld abschwächt oder abbaut.

2. Eine Vorrichtung zum Platzieren einer Vielzahl von Säulen (4) auf einem Substrat (1), das mindestens eine Glasscheibe (100) enthält, sodass die Vielzahl von Säulen (4) so angeordnet ist, dass diese ein vorbestimmtes Muster bilden und voneinander beabstandet sind, wobei die Vorrichtung Folgendes umfasst:
einen Magnettisch (9), der so konfiguriert ist, dass er das Substrat (1) darauf trägt;
einen Transportmechanismus (5), der so konfiguriert ist, dass er die Vielzahl von Säulen (4), die jeweils einen Magnetkörper beinhalten, zu vorbestimmten Positionen auf dem Substrat (1) transportiert; und
einen Verschiebungsmechanismus (8), der so konfiguriert ist, dass er eine relative Position des Substrats (1) relativ zum Magnettisch (9) ändert,
wobei
der Magnettisch (9) einen Elektromagneten (95) beinhaltet, der in einem Abschnitt des Magnettisches (9) installiert ist, und wobei
der Elektromagnet (95) so konfiguriert ist, dass er ein Magnetfeld zu einem Zeitpunkt erzeugt, um die Vielzahl von Säulen (4) zu vorbestimmten Positionen auf dem Substrat (1) zu transportieren, und das Magnetfeld zu einem Zeitpunkt abschwächt oder abbaut, um eine relative Position des Substrats (1) relativ zum Magnettisch (9) zu ändern.

## Revendications

1. Un procédé pour placer une pluralité de piliers (4) sur un substrat (1), incluant au moins une vitre (100), de manière que la pluralité de piliers (4) soient disposés pour former un motif prédéterminé et qu'ils soient espacés les uns des autres, le procédé comprenant :
une étape d'installation consistant à installer le substrat (1) sur un socle magnétique (9) ; et
une étape de placement consistant à placer la pluralité de piliers (4), chacun incluant un corps magnétique, dans le motif prédéterminé sur le substrat (1), sachant que
le socle magnétique (9) inclut un électroaimant (95) installé dans une portion du socle magnétique (9),
l'étape de placement inclut :
une étape de montage consistant à monter au moins l'un de la pluralité de piliers (4) sur une région (115), située au-dessus de l'électroaimant (95), du substrat (1) ; et
une étape de déplacement consistant à modifier une position relative du substrat (1) par rapport au socle magnétique (9),
sachant que l'étape de montage est effectuée de manière répétée et en alternance avec l'étape de déplacement, et que
l'électroaimant (95) est configuré pour générer un champ magnétique pendant l'étape de montage et affaiblir ou dissiper le champ magnétique pendant l'étape de déplacement.

2. Un appareil pour placer une pluralité de piliers (4) sur un substrat (1), incluant au moins une vitre (100), de manière que la pluralité de piliers (4) soient disposés pour former un motif prédéterminé et qu'ils soient espacés les uns des autres, l'appareil comprenant :
un socle magnétique (9) configuré pour supporter le substrat (1) sur celui-ci ;
un mécanisme de transport (5) configuré pour transporter la pluralité de piliers (4), chacun incluant un corps magnétique, vers des positions prédéterminées sur le substrat (1) ; et
un mécanisme de déplacement (8) configuré pour modifier une position relative du substrat (1) par rapport au socle magnétique (9),
sachant que
le socle magnétique (9) inclut un électroaimant (95) installé dans une portion du socle magnétique (9), et que
l'électroaimant (95) est configuré pour générer un champ magnétique à un moment pour transporter la pluralité de piliers (4) vers des positions prédéterminées sur le substrat (1) et affaiblir ou dissiper le champ magnétique à un moment pour modifier une position relative du substrat (1) par rapport au socle magnétique (9).
